# FASCICULE DE BREVET EUROPEEN

(11) **EP 2 539 547 B1**
(45) Date de publication et mention de la délivrance du brevet: **04.01.2017**
(21) Numéro de dépôt: 11712624.3
(22) Date de dépôt: 23.02.2011
(51) Int. Cl.: F01D 25/16, F02C 7/06

(54) **TURBOMACHINE A ARBRE VERTICAL**
TURBOMASCHINE MIT VERTIKALER WELLE
TURBOMACHINE COMPRISING A VERTICAL SHAFT

(30) Priorité: 25.02.2010 FR 1051347
(43) Date de publication de la demande: 02.01.2013
(73) Titulaire: Safran Helicopter Engines, 64510 Bordes (FR)
(72) Inventeur: BATLLE, Frédéric, F-64140 Lons (FR)
(74) Mandataire: Milien, Jean-Baptiste Aurélien
(86) Numéro de dépôt international: PCT/FR2011/050372
(87) Numéro de publication internationale: WO 2011/104477

(56) Documents cités:
- EP-B1- 0 494 167
- FR-A- 1 400 147
- FR-A- 1 603 209
- FR-A1- 2 018 549
- GB-A- 787 738
- GB-A- 989 477
- US-A- 3 187 188

## Description

L'invention concerne le domaine des turbomachines.

Classiquement une turbomachine comprend au moins un arbre relié à au moins une roue de turbine (cette turbine pouvant être libre ou liée), cet arbre étant disposé horizontalement, c'est-à-dire avec son axe orienté selon une direction sensiblement perpendiculaire à la direction de la gravité. Pour assurer un maintien convenable de l'arbre et supporter son poids, plusieurs paliers, en général deux, sont répartis le long de cet arbre. Ainsi, dans une turbomachine comprenant successivement, de l'amont vers l'aval, un compresseur, une chambre de combustion et une turbine, un palier est disposé en amont du compresseur et un palier est disposé en aval de la chambre de combustion. Ceci présente plusieurs inconvénients.

Un premier inconvénient est que les arbres sont souvent longs et lourds, et malgré le maintien ponctuel réalisé par chaque palier, il réside des porte-à-faux le long desquels l'arbre peut se déformer à cause de son poids et de celui de la ou des roues de turbine qu'il supporte. Cette déformation statique modifie la rectitude de l'arbre, et crée du balourd quand la turbomachine fonctionne et que l'arbre tourne sur lui-même autour de son axe.

Un deuxième inconvénient est lié à la présence de plusieurs paliers qui alourdissent la turbomachine et nuisent à son rendement.

Enfin, un troisième inconvénient est que le palier disposé en aval de la chambre de combustion est dans une zone particulièrement chaude de la turbomachine et subit de fortes contraintes thermiques. Pour assurer le bon fonctionnement de ce dernier palier, et éviter les risques de cokéfaction, il faut prévoir un système de refroidissement, classiquement par circuit d'huile de refroidissement. Ce système de refroidissement est complexe à installer et à entretenir, ce qui augmente les coûts de fabrication et d'entretien de la turbomachine, et alourdit encore celle-ci.

FR1 603 209, EP 0 494 167 et GB 989 477 divulguent des turbomachines à arbre vertica.

l L'invention a pour but de pallier substantiellement au moins un des inconvénients précédemment cités.

Ce but est atteint grâce à une turbomachine telle que définie par la revendication 1, comprenant au moins un arbre portant au moins une roue de turbine, dans laquelle l'arbre est orienté sensiblement verticalement dans les situations d'utilisation normales de la turbomachine, l'arbre étant maintenu par un unique palier.

On notera que ladite roue de turbine peut appartenir aussi bien à une turbine liée qu'à une turbine libre de la turbomachine. On rappelle qu'une turbine liée est une turbine liée mécaniquement à un compresseur de la turbomachine tandis qu'une turbine libre est une turbine indépendante mécaniquement du compresseur.

Dans le présent exposé, la direction verticale correspond à la direction de la gravité. Ainsi, « orienté verticalement » signifie « orienté selon la direction de la gravité ». L'adverbe « sensiblement » est employé pour indiquer que la direction de l'arbre peut former un petit angle avec la direction verticale.

Par « situations d'utilisation normales de la turbomachine » on entend designer les situations où la turbomachine est montée sur un véhicule, notamment sur un aéronef (la turbomachine est alors, par exemple, un turbomoteur ou un turboréacteur), ce véhicule se déplaçant horizontalement (sur terre, sur l'eau ou dans les airs) ou bien lorsque la turbomachine est montée sur un site de production industrielle (la turbomachine est alors, par exemple, une turbine à gaz terrestre). La turbomachine peut être à l'arrêt ou en fonctionnement. Ainsi, en particulier, les situations de transport avant montage, ou de réparation de la turbomachine ne sont pas des "situations d'utilisation normales".

On comprend qu'en positionnant l'arbre selon la direction verticale, ce dernier ne présente plus de porte-à-faux susceptible d'induire des déformations statiques pouvant modifier sa rectitude, dues à son poids et à celui de la roue de turbine. Contrairement aux turbomachines de l'art antérieur, l'arbre selon l'invention n'est donc pas soumis à des efforts statiques radiaux (i.e. des efforts orientés selon une direction perpendiculaire à la direction axiale de l'arbre et coupant cet axe). Bien entendu, l'arbre n'étant également pas ou peu soumis à des efforts axiaux (i.e. des efforts orientés selon la direction axiale de l'arbre), il n'existe pas de risque que l'arbre flambe et voit sa rectitude modifiée. En effet, le poids de l'arbre et de la roue de turbine représente un effort négligeable pour l'arbre selon sa direction axiale. Ainsi, la rectitude de l'arbre est assurée.

Par ailleurs, l'arbre étant disposé verticalement, il n'est plus nécessaire de maintenir l'arbre, comme dans l'art antérieur, à l'aide de plusieurs paliers répartis sur sa longueur pour supporter son poids. En effet, en le maintenant en un seul emplacement par un unique palier l'arbre est correctement maintenu. Bien entendu, cet unique palier doit être apte à supporter selon la direction axiale le poids de l'ensemble constitué par l'arbre et la ou les roues de turbine.

En outre, en situations d'utilisation normales, lorsque la turbomachine fonctionne, l'arbre est stabilisé autour de sa position axiale d'origine (i.e. sa position axiale à l'arrêt) par effet gyroscopique. Rappelons que l'effet gyroscopique est la tendance qu'a tout corps, en rotation rapide autour d'un axe, à s'opposer à tout effort visant à modifier la direction de son axe de rotation. Ainsi, la position axiale de l'arbre reste la même au sein de la turbomachine quelles que soient les situations d'utilisation normales de la turbomachine, d'une part grâce au palier (qui maintien l'arbre dans sa position d'origine au sein de la turbomachine et supporte son poids lorsque la turbomachine est à l'arrêt) et d'autre part grâce à l'effet gyroscopique (qui stabilise l'arbre autour de sa position d'origine au sein de la turbomachine lorsque la turbomachine fonctionne).

Par ailleurs, la turbomachine présentant un unique palier, un gain de poids est réalisé par rapport aux turbomachines de l'art antérieur qui présentent plusieurs paliers. Ainsi, la turbomachine selon l'invention est plus légère et présente par conséquent un rendement amélioré par rapport aux turbomachines de l'art antérieur.

Cet unique palier permet également de réaliser un gain d'espace au sein de la turbomachine. En effet, l'unique palier de la turbomachine selon l'invention occupe moins d'espace que les plusieurs paliers des turbomachines de l'art antérieur. Ce gain d'espace permet notamment à la turbomachine selon l'invention de présenter un encombrement réduit par rapport aux turbomachines de l'art antérieur, par exemple en raccourcissant l'arbre.

On notera que par « unique palier » on entend désigner un ensemble comprenant une seule bague de support de l'arbre, ou bien un ensemble comprenant plusieurs bagues de support de l'arbre mises côte-à-côte, dans la mesure où ces bagues de support mises côte-à-côte sont réparties sur moins de 10% de la longueur de l'arbre.

Avantageusement, la turbomachine comprenant une zone chaude, l'unique palier est disposé en dehors de ladite zone chaude.

Classiquement dans une turbomachine, la zone chaude est la zone au voisinage et immédiatement en aval de la chambre de combustion dans laquelle se situent les turbines (libres et/ou liées) entrainées par les gaz chauds.

On comprend donc que le palier peut être disposé dans toutes les zones le long de l'arbre en dehors de la zone chaude. En particulier, le palier peut être disposé en amont de la chambre de combustion, ou au-delà de la zone immédiatement en aval de la chambre de combustion.

Selon un mode de réalisation, notamment lorsque la turbomachine est un turboréacteur ou un turbomoteur d'hélicoptère, le palier est disposé dans une zone froide de la turbomachine, c'est-à-dire une zone dont la température n'excède pas 200°C (deux cents degrés Celsius).

Selon un autre mode de réalisation, le palier est disposé dans la zone chaude de la turbomachine. Dans ce cas, pour protéger l'unique palier des températures élevées, il est confiné dans une zone refroidie et/ou dans une zone protégée par un écran thermique.

On notera que dans le présent exposé, les termes « amont » ou « aval » font référence au sens d'écoulement normal des gaz dans la turbomachine.

Préférentiellement, la turbomachine comprenant une chambre de combustion, l'unique palier est disposé en amont de ladite chambre de combustion.

La température des gaz en amont de la chambre de combustion est inférieure à la température des gaz en aval de la chambre de combustion. Ainsi, en disposant le palier en amont de la chambre de combustion, on s'assure que le palier est disposé dans un environnement dans lequel il est soumis à des contraintes thermiques plus faibles que s'il était disposé en aval de la chambre de combustion. Ces contraintes thermiques en amont de la chambre de combustion sont suffisamment faibles pour ne pas endommager le palier, et ne pas nécessiter un dispositif de refroidissement de ce dernier.

Préférentiellement, la turbomachine comprenant un compresseur, l'unique palier est disposé en amont dudit compresseur.

Avantageusement, la turbomachine comprenant un compresseur, une première turbine, et une seconde turbine, ledit arbre constitue un premier arbre portant au moins une roue de turbine appartenant à un des éléments parmi la première turbine et la seconde turbine, et ledit unique palier constitue un premier unique palier.

Par exemple, selon une variante, la première turbine est une turbine liée tandis que la seconde turbine est une turbine libre. Selon une autre variante, la première turbine est une turbine liée à un corps haute pression tandis que la seconde turbine est une turbine liée à un corps basse pression.

La turbomachine comprend en outre un second arbre orienté sensiblement verticalement dans les situations d'utilisation normales de la turbomachine, ledit second arbre portant au moins une roue de turbine appartenant à l'autre élément parmi la première turbine et la seconde turbine, ledit second arbre étant maintenu par un second unique palier.

Avantageusement, le premier arbre et le second arbre sont coaxiaux. En outre, le premier arbre traverse préférentiellement le second arbre. Encore préférentiellement, les premier et second uniques paliers sont disposés en amont du compresseur.

Selon un mode de réalisation, la turbomachine selon l'invention est (i.e. constitue) un turbomoteur ou un turboréacteur d'aéronef. Préférentiellement, la turbomachine selon l'invention est (i.e. constitue) un turbomoteur d'hélicoptère.

L'invention et ses avantages seront mieux compris à la lecture de la description détaillée faite ci-après de modes de réalisation de l'invention donnés à titre d'exemples non limitatifs. Cette description fait référence aux figures annexées, sur lesquelles :
- la figure 1 représente schématiquement, en coupe longitudinale, un premier exemple de turbomachine, et
- la figure 2 représente schématiquement, en coupe longitudinale, un second exemple de turbomachine.

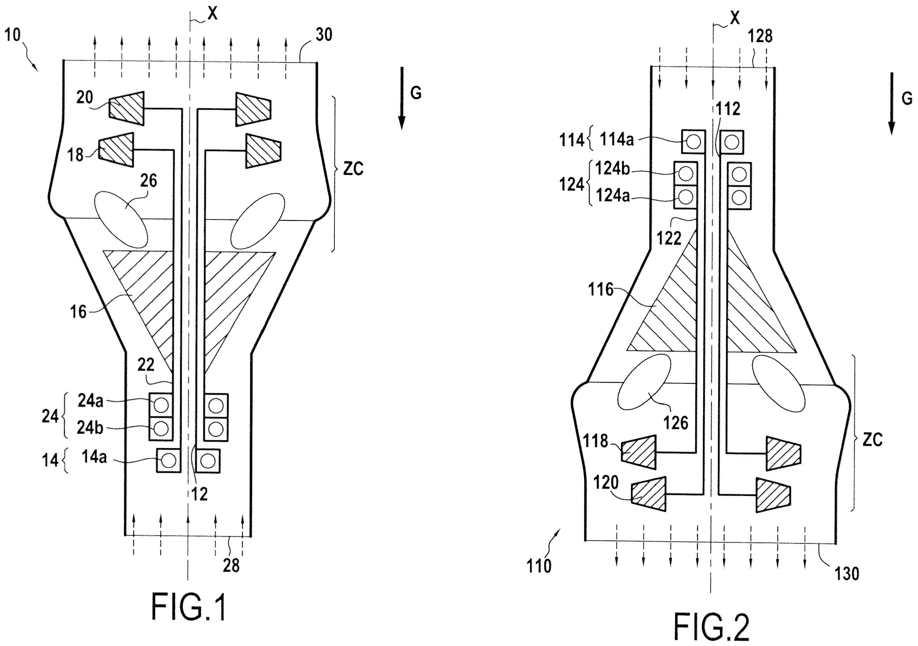

La figure 1 représente un premier exemple de turbomachine 10 vue schématiquement en coupe longitudinale selon l'axe X de la turbomachine 10. L'axe X de la turbomachine 10 est orienté verticalement, c'est-à-dire parallèlement à la direction de la gravité G représentée par la flèche en gras. Les flèches en traits discontinus indiquent le sens de l'écoulement des gaz dans la turbomachine.

La turbomachine 10 comporte un arbre 12 orienté verticalement et maintenu par un unique palier 14, la turbomachine étant représentée dans une situation d'utilisation normale. La turbomachine 10 comporte un compresseur 16, une turbine liée 18 et une turbine libre 20, l'arbre 12 constituant un premier arbre portant une roue de turbine appartenant à la turbine libre 20, et l'unique palier 14 constituant un premier unique palier.

Dans l'exemple représenté, la turbine libre 20 et la turbine liée 18 ne comportent qu'une seule roue de turbine. Bien entendu, selon une variante, la turbine liée et/ou la turbine libre peut présenter plusieurs roues de turbine.

La turbomachine 10 comprend en outre un second arbre 22 également orienté verticalement, le second arbre 22 portant une roue de turbine appartenant à la turbine liée 18, le second arbre 22 étant maintenu par un second unique palier 24.

Le premier arbre 12 est coaxial au second arbre 22 et traverse le second arbre 22.

Les premier et second uniques paliers 14 et 24 sont disposés en amont du compresseur 16.

Le premier arbre 12 qui porte la turbine libre 20 est liée mécaniquement à un dispositif de transmission de force non représenté afin d'utiliser l'énergie motrice générée par la turbomachine 10.

La turbomachine 10 comporte également une chambre de combustion 26 de géométrie annulaire autour de l'axe X, les premier et second unique paliers 14 et 24 étant disposés en amont de la chambre de combustion 26. On notera que dans cet exemple le compresseur 16 et la turbine liée 18 sont tous les deux portés par le second arbre 22 tandis que la turbine libre 20 est portée par le premier arbre 12. La chambre de combustion 26 est immobile et portée par le carter de la turbomachine 10. Par ailleurs, la turbine libre 20 est disposée en aval de la turbine liée 18.

Les gaz à température ambiantes pénètrent dans la turbomachine 10 par la bouche d'admission de gaz 28. Ces gaz sont alors comprimés par le compresseur 16. Par la suite, les gaz entrent dans la chambre de combustion 26 où un carburant est injecté et brûlé. Ceci échauffe les gaz. Ces gaz chauds subissent ensuite une détente et se refroidissent en traversant les turbines 18 et 20. La turbine liée 18 entraine le compresseur 16 tandis que la turbine libre 20 entraine le premier arbre 12 qui transmet l'énergie mécanique ainsi récupérée au dispositif de transmission de force non représenté. Enfin les gaz sont acheminés vers l'extérieur de la turbomachine 10 via la bouche d'échappement 30. On comprend donc que la température des gaz est décroissante depuis la chambre de combustion 26 jusqu'à turbine libre 20, et plus généralement jusqu'à la bouche d'échappement des gaz 30.

Ainsi, la zone ZC comprise entre l'amont de la chambre de combustion 26 et l'aval de la turbine libre 20 constitue une zone chaude de la turbomachine 10. Notons que les turbines liée 18 et libre 20 sont disposées dans la zone immédiatement en aval de la chambre de combustion 26.

En disposant les premier et second uniques paliers 14 et 24 en amont du compresseur 16, au voisinage de la bouche d'admission de gaz 28, on dispose les premier et second uniques paliers 14 et 24 en dehors de la zone chaude ZC. Selon une variante, le premier et/ou le second palier est disposé en dehors de la zone chaude ZC en aval de la turbine libre 20. Cependant, bien que supportable par les uniques paliers 14 et 24, la température ambiante y est plus élevée qu'en amont de la zone chaude ZC. En d'autres termes, c'est en amont de la chambre de combustion 26, et plus particulièrement au voisinage de la bouche d'admission de gaz 28, que les paliers 14 et 24 subissent le moins de contraintes thermiques.

Dans cet exemple, l'unique palier 14 comprend une seule bague de support d'arbre 14a tandis que l'unique palier 24 comprend deux bagues de support d'arbre 24a et 24b. Ces bagues de support 14a, 24a et 24b sont par exemple des roulements à billes, des roulements à rouleaux ou autre.

Par ailleurs, les paliers 14 et 24 sont disposés dans la partie inférieure de la turbomachine 10 selon la direction verticale (qui coïncide avec la direction axiale X de la turbomachine 10). Plus généralement, sur les figures 1 et 2, la partie inférieure correspond au bas des figures tandis que la partie supérieure correspond au haut des figures. En d'autres termes, la partie inférieure est la partie vers laquelle est dirigé le sens de la gravité G, la partie supérieure étant la partie opposée.

Dans la figure 1, les paliers 14 et 24 maintiennent les arbres 12 et 22 par leurs extrémités inférieures. Ainsi, les paliers 14 et 24 soutiennent « par le bas » les arbres 12 et 22. En d'autres termes, on considère que l'architecture de la turbomachine 10 est une architecture « posée » sur les paliers 14 et 24. Dans cet exemple les gaz sont admis dans la turbomachine 10 par le bas dans la partie inférieure de la turbomachine 10 et sont expulsés par le haut depuis la partie supérieure de la turbomachine 10.

La figure 2 représente un second exemple de turbomachine 110 similaire au premier exemple de turbomachine 10. Les composants similaires ne sont pas décrits à nouveau et voient leurs références numériques incrémentées de 100.

La principale différence entre la turbomachine 10 et la turbomachine 110 est qu'elles sont inversées l'une par rapport à l'autre, les éléments de la partie inférieure de la turbomachine 10 se retrouvant dans la partie supérieure de la turbomachine 110 et vice versa. Ainsi, les premier et second uniques paliers 114 et 124 sont dans la partie supérieure de la turbomachine 110 et maintiennent les premier et second arbres 112 et 122 « par le haut », au niveau de leurs extrémités supérieures. En d'autres termes, on considère que l'architecture de la turbomachine 110 est une architecture « suspendue » aux paliers 114 et 124. Dans cet exemple, les gaz sont admis dans la turbomachine 110 par le haut dans la partie supérieure de la turbomachine 110 et sont expulsés par le bas depuis la partie inférieure de la turbomachine 110.

## Revendications

1. Turbomachine comprenant un compresseur (16), un premier arbre (12), un second arbre (22), une première turbine (18, 20) et une seconde turbine (18, 20), le premier arbre (12) portant au moins une roue de turbine appartenant à un des éléments parmi la première turbine (18, 20) et la seconde turbine (18, 20), le second arbre (22) portant au moins une roue de turbine appartenant à l'autre élément parmi la première turbine (18, 20) et la seconde turbine (18, 20) dans laquelle les premier et second arbres (12, 22) sont orientés sensiblement verticalement dans les situations d'utilisation normales de la turbomachine (10), **caractérisé en ce que** le premier arbre (12) est maintenu par un premier unique palier (14) tandis que le second arbre (22) est maintenu par un second unique palier (24).

2. Turbomachine selon la revendication 1, dans laquelle le premier arbre (12) et le second arbre (22) sont coaxiaux.

3. Turbomachine selon la revendication 2, dans laquelle le premier arbre (12) traverse le second arbre (22).

4. Turbomachine selon la revendication 3, comprenant une zone chaude (ZC), dans laquelle les premier et second uniques paliers (14, 24) sont disposés en dehors de ladite zone chaude (ZC).

5. Turbomachine selon la revendication 3 ou 4, comprenant une chambre de combustion (26), dans laquelle les premier et second uniques paliers (14, 24) sont disposés en amont de ladite chambre de combustion (26).

6. Turbomachine selon l'une quelconque des revendications 3 à 5, dans laquelle les premier et second uniques paliers (14, 24) sont disposés en amont du compresseur (16).

7. Turbomachine selon l'une quelconque des revendications 1 à 6, constituant un turbomoteur ou un turboréacteur d'aéronef.

## Patentansprüche

1. Turbomaschine, aufweisend einen Kompressor (16), eine erste Welle (12), eine zweite Welle (22), eine erste Turbine (18, 20) und eine zweite Turbine (18, 20), wobei die erste Welle (12) mindestens ein Turbinenrad trägt, das zu einem der Elemente der ersten Turbine (18, 20) und der zweiten Turbine (18, 20) gehört, wobei die zweite Welle (22) mindestens ein Turbinenrad trägt, das zum anderen Element der ersten Turbine (18, 20) und der zweiten Turbine (18, 20) gehört, wobei die erste und die zweite Welle (12, 22) bei normalen Anwendungsbedingungen der Turbomaschine (10) im Wesentlichen vertikal ausgerichtet sind, **dadurch gekennzeichnet, dass** die erste Welle (12) von einem ersten Einzellager (14) gehalten wird, während die zweite Welle (22) von einem zweiten Einzellager (24) gehalten wird.

2. Turbomaschine nach Anspruch 1, wobei die erste Welle (12) und die zweite Welle (22) koaxial sind.

3. Turbomaschine nach Anspruch 2, wobei die erste Welle (12) durch die zweite Welle (22) verläuft.

4. Turbomaschine nach Anspruch 3, aufweisend eine Warmzone (ZC), wobei das erste und das zweite Einzellager (14, 24) außerhalb der Warmzone (ZC) angeordnet sind.

5. Turbomaschine nach Anspruch 3 oder 4, aufweisend eine Brennkammer (26), wobei das erste und das zweite Einzellager (14, 24) stromaufwärts der Brennkammer (26) angeordnet sind.

6. Turbomaschine nach einem der Ansprüche 3 bis 5, wobei das erste und das zweite Einzellager (14, 24) stromaufwärts des Kompressors (16) angeordnet sind.

7. Turbomaschine nach einem der Ansprüche 1 bis 6, bildend einen Turbomotor oder einen Turbostrahlkörper für einen Flugkörper.

## Claims

1. A turbomachine comprising a compressor (16), a first shaft (12), a second shaft (22), a first turbine (18, 20), and a second turbine (18, 20), the first shaft (12) carrying at least one turbine wheel belonging to one of the elements selected from the first turbine (18,20) and the second turbine (18, 20), the second shaft (22) carrying at least one turbine wheel belonging to the other element selected from the first turbine (18,20) and the second turbine (18, 20), wherein the first and second shafts (12,22) are oriented substantially vertically in normal utilization situations of the turbomachine (10), **characterized in that** the first shaft (12) is held by a first single bearing (14) while the second shaft (22) is held by a second single bearing (24).

2. A turbomachine according to claim 1, wherein the first shaft (12) and the second shaft (22) are coaxial.

3. A turbomachine according to claim 2, wherein the first shaft (12) passes inside the second shaft (22).

4. A turbomachine according to claim 3, having a hot zone (ZC), wherein the first and second single bearings (14, 24) are located outside said hot zone (ZC).

5. A turbomachine according to claim 3 or claim 4, having a combustion chamber (26), wherein the first and second single bearings (14, 24) are located upstream from said combustion chamber (26).

6. A turbomachine according to any one of claims 3 to 5, wherein the first and second single bearings (14, 24) are located upstream from the compressor (16).

7. A turbomachine according to any one of claims 1 to 6, constituting an aircraft turbojet or turboshaft engine.
